# EUROPEAN PATENT SPECIFICATION

(11) **EP 1 960 721 B1**
(45) Date of publication and mention of the grant of the patent: **14.06.2017**
(21) Application number: 06841302.0
(22) Date of filing: 07.12.2006
(51) Int. Cl.: F25D 17/04, F25D 27/00, A23B 7/015, A23B 7/04, A23L 3/26

(54) **A REFRIGERATOR WITH A LIGHT SOURCE IRRADIATING THE FOOD THEREIN**
KÜHLSCHRANK MIT LICHTQUELLE ZUR BESTRAHLUNG DER NAHRUNG DARIN
REFRIGERATEUR ÉQUIPÉ D'UNE LAMPE IRRADIANT LES ALIMENTS QUI S'Y TROUVENT

(30) Priority: 16.12.2005 TR 200505064
(43) Date of publication of application: 27.08.2008
(73) Proprietor: Arçelik Anonim Sirketi, 34950 Istanbul (TR)
(72) Inventor: ARISOY, Emre, 34950 Istanbul (TR); KAHRAMAN, Soner, 34950 Istanbul (TR); OKTEN, Cigdem, 34950 Istanbul (TR); DEMIRAY, Fatih, 34950 Istanbul (TR)
(86) International application number: PCT/EP2006/069421
(87) International publication number: WO 2007/068645

(56) References cited:
- JP-A- 2002 267 348
- JP-A- 2005 065 622
- JP-A- 2005 164 131
- US-A- 2 156 462
- US-A1- 2002 178 706
- US-A1- 2003 154 732
- US-A1- 2005 047 118

## Description

The present invention relates to a refrigerator comprising a light source that provides to keep the food items fresh therein.

The food items stored in refrigerators for a long time are observed to discolour and lose their nutritional value and their characteristics with time. The research done has shown that some foods that are subjected to light, particularly to light of certain wavelengths, have prolonged storage life, also the vitamin values increase and the color is protected For example, the chlorophyll present in the green leafed vegetables is most sensible to light in wavelengths of 420-430 and 620-630 nm, the carotenoid in orange colored foods is sensible to light in wavelengths of 460-490 nm. Therefore, various irradiation devices have been emplaced in refrigerators to preserve foodstuffs for a longer period of time.

In the state-of-the-art Japanese patent application no. JP2002267348, a description is given of a refrigerator wherein a red LED (light emitting diode) is utilized for preserving green leafed plants for a long period of time. In this refrigerator, storage compartments are positioned vertically such that all the vegetables can benefit from the light equally.

In the Japanese patent application JP2005065622, a refrigerator comprising an irradiation board having red, blue and green LED's is described These LED's are turned on in suitable combinations to form the required light wavelength for each vegetable group.

In the Japanese patent application JP2005164131, an irradiation device is driven when the vegetable container is installed. When the vegetable container is not installed in the storage room, the drive of the weak beam irradiation device is stopped. Document US 2005/0047118 describes a light source detachably assembled inside an enclosure. Document US 2002/0178706 describes a battery-powered air filtering device to be used inside a refrigerator for removing malodor and ethylene. Document US 2 156 462 describes a batter-powered light source for a refrigerator; the light source is switched on when the refrigerator door is opened.

The object of the present invention is the realization of a refrigerator that comprises a light source providing the fruit and vegetables in a compartment to benefit more from the light.

The refrigerator realized in order to fulfill the objectives of the present invention is explicated in the attached claims. In the refrigerator of the present invention, a light source is provided which is detachably fitted in a housing in the body and detached to be emplaced in the vegetable container when required to irradiate the fruit and vegetables therein with the light in the suitable wavelength. This light source comprises a power source and a lamp fed by this power source. The elements like the power source and the lamp are emplaced in a shell serving as a capsule. The shell is transparent providing the radiation of light out of the shell. The shell is preferably of a spherical and soft configuration therefore does not harm the fruit and vegetables among which it is emplaced.

The power source within the light source is of a rechargeable type. The power source is recharged while the light source is attached in the housing on the body.

In an embodiment of the present invention, LEDs are used as the lamp. Blue, orange, red and green LEDs can be situated all together or separately.

In another embodiment of the present invention, the light source comprises a control card and the lamps can be turned on when required by means of this card For example, it is possible to turn on the lamps intermittently.

By means of the refrigerator of the present invention, the irradiation of the fruit and vegetables with more light is made possible by emplacing the detachable light source in the body among the fruit and vegetables. Furthermore, the user can change the place of the light source when desired, increasing the probability of the other fruits and vegetables to be subjected to the light.

The refrigerator realized in order to fulfill the objectives of the present invention is illustrated in the attached figures, where:
Figure 1 - is the schematic view of a refrigerator.
Figure 2 - is the detailed view of the body when the light source is in its housing.
Figure 3 - is the detailed view of a body when the light source is taken out of its housing.
Figure 4 - is the detailed view of a body when the light source is emplaced among the fruits and vegetables.
Figure 5 - is the perspective view of the light source.
Figure 6 - is the perspective view of the light source from another angle.
Figure 7 - is the sectional view of the light source.
Figure 8 - is the perspective view of the control card

The elements shown in figures are numbered as follows:
- 1.: Refrigerator
- 2.: Body
- 3.: Housing
- 4.: Light source
- 5.: Power source
- 6.: Lamp
- 7.: End
- 8.: Socket
- 9.: Vibration unit
- 10.: Warning indicator
- 11.: Button
- 12.: Control card
- 13.: Compartment
- 14.: Shell

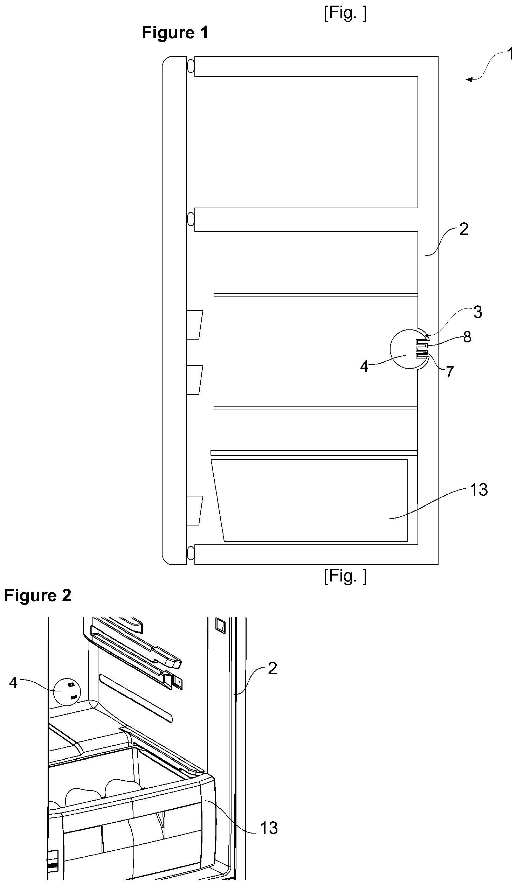

The refrigerator (1) of the present invention comprises,
- a body (2),
- a compartment (13) situated in the body (2), into which the fruits and vegetables are emplaced,
- a housing (3) situated on one of the inner walls of the body (2), and
- a light source (4)
   - having;
      - a power source (5),
      - at least one lamp (6) fed by the power source (5) and that provides the emission of light in the required wavelength to preserve the nutritional values of the fruits and vegetables and
      - a shell (14) surrounding the power source (5) and the lamp (6),
   - assembled detachably in the housing (3),
   - detached and emplaced in the compartment (13) when required, providing the fruits and vegetables in the compartment (13) to benefit better from the light emitted by the lamp (6) (Figure 1, Figure 2, Figure 3 and Figure 4).

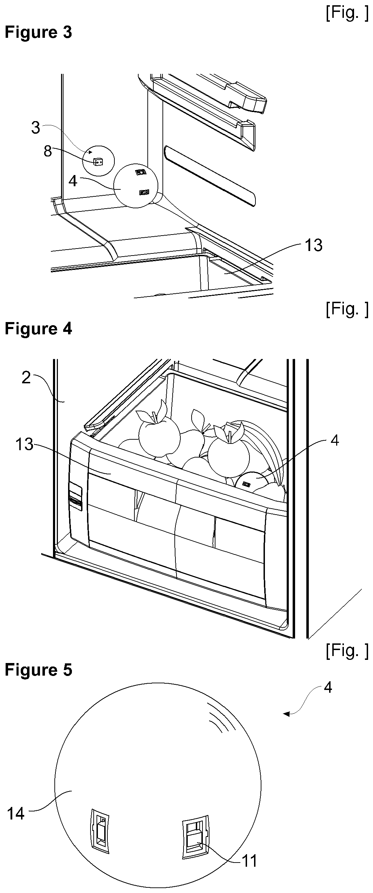

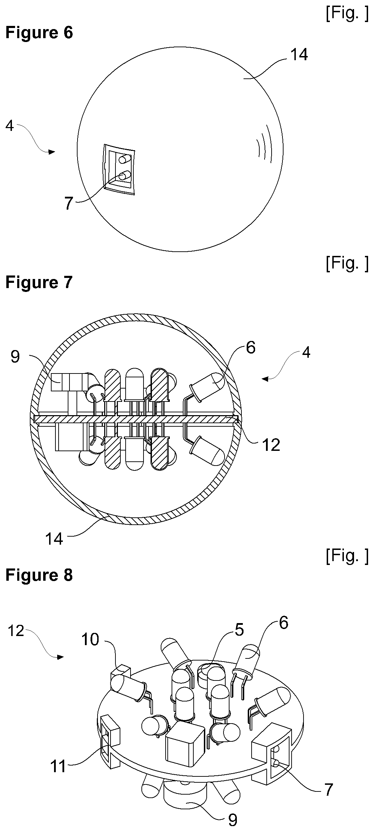

The shell (14) of the light source (4) has a partially or entirely transparent configuration so that the light emitted by the lamp (6) can reach out. Furthermore, the shell (14) is produced of a resilient material in order not to harm the fruits and vegetables when emplaced among them. The shell (14) furthermore has a spherical or ellipsoidal geometry without corners for not harming the fruits and vegetables around it (Figure 5 and Figure 7). Preferably LEDs are utilized as the lamp (6). These LEDs are preferably blue, red, orange and/or green. The light source (4) is kept in the housing (3) when its use is not required (Figure 1 and Figure 2). However, when the user emplaces a fruit or vegetable in the container (13), detaches the light source (4) from the housing (3) (Figure 3), and emplaces it among the fruits and vegetables (Figure 4). After this phase, the rays emitted by the lamp (6) in the light source (4) easily reach the fruits and vegetables in the compartment (13) providing to extend their storage lives and increase their nutritional values.

According to the present invention, the light source (4) comprises a power source (5) that can be recharged such as a battery (Figure 8). The light source (4) furthermore comprises conductive ends (7) extending out, connected with the power source (5), and the housing (3) comprises a socket (8) with a configuration matching these ends (7), providing to transmit the required electric energy to the power source (5) by means of the ends (7) (Figure 1, Figure 3 and Figure 6). Consequently the power source (5) can be charged as long as the light source (4) is fitted in the housing (3).

In another embodiment of the present invention, the light source (4) comprises an audio and/or visual warning indicator (10) that informs the user in case of an error, for example, that the power source (5) has to be changed/charged (Figure 5 and Figure 8).

In another embodiment of the present invention, the light source (4) comprises a control card (12) that provides to carry out various functions and at least one button (11) that provides the user to select these functions (Figure 5 and Figure 8). In an embodiment, the control card (12) provides the lamp (6) to be turned on intermittently. In the embodiment comprising more than one lamp (6) emitting lights in different wavelength ranges, it provides more than one lamp (6) to be turned on simultaneously.

In this embodiment, when the user emplaces the vegetables in the container (13), he/she detaches the light source (4) from the housing (3). If the vegetables are green leafed, the required selection is made by using the button (11) for turning on the blue and/or red lamps (6) emitting light in the most suitable wavelength that can aid the photosynthesis. On the other hand, if vegetables like carrots containing carotenoid are the case, the button (11) is brought to the determined position to turn on the blue and/ or the green lamps (6). Afterwards the user emplaces the light source (4) in the compartment (13) such that the most possible amount of vegetables can benefit from the light. The light source (4) stays turned on for intervals predetermined by the producer or continually, providing the light needed by the vegetables. The vegetables subjected to the light preserve their nutritional values and last for a longer time by carrying on their maturation.

In another embodiment of the present invention, the light source (4) furthermore comprises a vibration unit (9) (Figure 7 and Figure 8). This vibration unit (9) helps the other vegetables to reach light by vibrating from time to time when the light source (6) is detached from the housing (3) and emplaced among the vegetables.

The light source (4) furthermore comprises an antenna (not shown in the figures) that communicates with the control panel (not shown in figures) for monitoring the functions from this control panel on the body (2).

By emplacing the movable light source (4) among the fruits and vegetables in the refrigerator (1) of the present invention, more of the fruits-vegetables are provided to benefit from the light.

## Claims

1. A refrigerator (1) comprising
a body (2) and
a compartment (13) situated in the body (2), into which the fruits and vegetables are emplaced,
a housing (3) situated on one of the inner walls of the body (2),
a light source (4) having a power source (5) and at least one lamp (6) fed by the power source (5) that provides the emission of light in the required wavelength to preserve the nutritional values of the fruits and vegetables, the light source (4) providing the fruits and vegetables in the compartment (13) to benefit better from the light emitted by the lamp (6), **characterized by** the light source (4)
- having a shell (14) surrounding the power source (5) and the lamp (6),
- being assembled detachably in the housing (3),
- being detached and emplaced in the compartment (13) when required,
- comprising a power source (5) that can be recharged such as a battery,
- comprising conductive ends (7) extending out, connected with the power source (5), and the housing (3) having a socket (8) with a configuration matching these ends (7), providing to transmit the required electric energy to the power source (5) by means of the ends (7).

2. A refrigerator (1) as in Claim 1, **characterized by** a light source (4) having a partially or entirely transparent shell (14) produced of a resilient material in order not to damage the fruits and vegetables among which it is emplaced.

3. A refrigerator (1) as in Claim 1 or 2, **characterized by** a light source (4) comprising a shell (14) having a geometry without corners in order not to damage the fruits and vegetables around it.

4. A refrigerator (1) as in any one of the above claims, **characterized by** a lamp (6) that is a blue, red, green or orange colored LED.

5. A refrigerator (1) as in any one of the above claims, **characterized by** a light source (4) comprising an audio and/or visual warning indicator (10) that informs the user in case of an error.

6. A refrigerator (1) as in any one of the above claims, **characterized by** a light source (4) comprising a control card (12) that provides to carry out various functions and at least one button (11) that provides the user to select these functions.

7. A refrigerator (1) as in Claim 6, **characterized by** a light source (4) comprising an antenna that can communicate with the control panel in order to monitor various functions through this control panel situated on the body (2).

8. A refrigerator (1) as in any one of the above claims, **characterized by** a light source (4) comprising a vibration unit (9) that provides the other vegetables in the compartment (13) to reach light by vibrating from time to time when the light source (4) is detached from the housing (3) and emplaced among the vegetables.

## Patentansprüche

1. Kühlschrank (1), der
- ein Gehäuse (2) und
- einen Kammer (13) im Gehäuse (2), worin Obst und Gemüse hineingelegt wird,
- einen Kasten (3), der auf einer der Innenwände des Gehäuses (2) liegt,
- mindestens eine Leuchte (6), die mittels einer Stromquelle (5) gespeist wird, die in der erforderlichen Wellenlänge die Lichtemissionen gewährleistet, um die Nährwerte der Früchte und der Gemüse zu schützen, und eine Lichtquelle (4),die eine Stromquelle (5) aufweist, wobei die Lichtquelle (4) gewährleistet, dass die im Kammer (13) vorhandene Früchte und Gemüse von der Leuchte (6) emittiertes Licht noch mehr nutzen können,
umfasst, **gekennzeichnet durch** dass;
eine Lichtquelle (4),
- die einen äußerlichen Rahmen (14), der die Stromquelle (5) und die Leuchte (6) umgibt, aufweist,
- die in den Kasten (3) lösbar montiert ist,
- die auf Wunsch in den Kammer (13) installiert und entfernt werden kann,
- die eine Stromquelle (5) umfasst, die wie eine Batterie wieder aufladbar ist,
- die die leitende Anschlüsse (7) beinhaltet, die in Verbindung mit der Stromquelle (5) stehen und nach aussen erstrecken und
einen Kasten (3),
- der eine Buchse (8) aufweist, die einen Aufbau passend diesen leitenden Anschlüsse (7) umfasst und wobei durch diese Anschlüsse (7) die Übertragung der erforderlichen elektrischen Energie an die Stromquelle (5) gewährleistet wird.

2. Kühlschrank (1) nach Anspruch 1 **gekennzeichnet durch** eine Lichtquelle (4), die einen teilweise oder vollständig durchsichtigen Rahmen (14) aufweist, der aus einem elastischen Material ausgebildet ist, um Schäden zu vermeiden, wenn sie in die Mitte der Früchten und Gemüse eingesetzt wird.

3. Kühlschrank (1) nach einem der Ansprüche 1 oder 2 **gekennzeichnet durch** eine Lichtquelle (4), die einen Rahmen (14) mit einer Geometrie ohne Ecken aufweist, um die Früchten und Gemüse in ihrer Umgebung nicht beschädigen zu können.

4. Kühlschrank (1) nach einem der vorhergegangenen Ansprüche **gekennzeichnet durch** eine Leuchte (6), die blaue, rote, grüne oder orange LED's aufweist

5. Kühlschrank (1) nach einem der vorhergegangenen Ansprüche **gekennzeichnet durch** eine Lichtquelle (4), die eine akustische und / oder optische Warnanzeige (10) umfasst, die bei dem fehlerhaften Fall den Bediener informiert.

6. Kühlschrank (1) nach einem der vorhergegangenen Ansprüche **gekennzeichnet durch** eine Lichtquelle (4), die eine Steuerkarte (12) umfasst, die die Realisierung der verschiedenen Funktionen gewährleistet und mindestens eine Taste (11), die das Auswählen der Funktionen vom Bediener sicherzustellen.

7. Kühlschrank (1) nach Anspruch 6 **gekennzeichnet durch** eine Lichtquelle (4), die eine Antenne umfasst, die zum Zweck die verschiedenen Funktionen in der Schalttafel auf dem Gehäuse (2) zu beobachten angeordnet ist und mit der Schalttafel zusammenwirkt.

8. Kühlschrank (1) nach einem der vorhergegangenen Ansprüche **gekennzeichnet durch** eine Lichtquelle (4), die eine Vibrationseinheit (9) umfasst, die durch Vibrieren von Zeit zu Zeit das Gelangen auch der anderen Gemüse im Kammer (13) an das Licht sicherstellt, wenn die Lichtquelle (4) aus dem Kasten (3) herausgenommen und in das Gemüse eingesetzt wird.

## Revendications

1. Un réfrigérateur (1) comprenant
un corps (2) et
un compartiment (13) situé dans le corps (2), dans lequel sont placés les fruits et les légumes,
un boîtier (3) situé sur l'une des parois intérieures du corps (2),
une source lumineuse (4) ayant une source d'énergie (5) et au moins une lampe (6) alimentée par la source d'énergie (5) qui fournit l'émission de lumière dans la longueur d'onde requise pour préserver les valeurs nutritionnelles des fruits et légumes, la source lumineuse (4) fournissant les fruits et légumes dans le compartiment (13) pour bénéficier au mieux de la lumière émise par la lampe (6), **caractérisé par** la source lumineuse (4)
- ayant une coque (14) entourant la source d'énergie (5) et la lampe (6),
- étant assemblée de manière détachable dans le boîtier (3),
- étant détachée et mise en place dans le compartiment (13) lorsque cela est nécessaire,
- comprenant une source d'énergie (5) pouvant être rechargée telle qu'une batterie,
- comportant des extrémités conductrices (7) s'étendant vers l'extérieur, reliées à la source d'énergie (5), et
le boîtier (3) comportant une douille (8) avec une configuration correspondant à ces extrémités (7), fournissant pour transmettre l'énergie électrique requise à la source d'énergie (5) au moyen des extrémités (7).

2. Un réfrigérateur (1) selon la revendication 1, **caractérisé par** une source lumineuse (4) ayant une coque partiellement ou entièrement transparente (14) réalisée en un matériau résilient afin de ne pas endommager les fruits et légumes parmi lesquels il est mis en place.

3. Un réfrigérateur (1) selon la revendication 1 ou 2, **caractérisé par** une source lumineuse (4) comprenant une coque (14) ayant une géométrie sans coins pour ne pas endommager les fruits et les légumes qui l'entourent.

4. Un réfrigérateur (1) selon l'une quelconque des revendications précédentes, **caractérisé par** une lampe (6) qui est une LED bleue, rouge, verte ou orange.

5. Un réfrigérateur (1) selon l'une quelconque des revendications précédentes, **caractérisé par** une source lumineuse (4) comprenant un indicateur d'avertissement audio et / ou visuel (10) qui informe l'utilisateur en cas d'erreur.

6. Un réfrigérateur (1) selon l'une quelconque des revendications précédentes, **caractérisé par** une source lumineuse (4) comprenant une carte de commande (12) fournissant pour effectuer différentes fonctions et au moins un bouton (11) qui permet à l'utilisateur de sélectionner ces fonctions.

7. Un réfrigérateur (1) selon la revendication 6, **caractérisé par** une source lumineuse (4) comprenant une antenne qui peut communiquer avec le panneau de commande pour surveiller diverses fonctions par l'intermédiaire de ce panneau de commande situé sur le corps (2).

8. Un réfrigérateur (1) selon l'une quelconque des revendications précédentes, **caractérisé par** une source de lumière (4) comprenant une unité de vibration (9) qui fournit les autres légumes dans le compartiment (13) pour atteindre la lumière en faisant vibrer de temps en temps lorsque la source lumineuse (4) est détachée du boîtier (3) et placée entre les légumes.
